Europäisches Patentamt

European Patent Office

Office européen des brevets

(19)

(11) Veröffentlichungsnummer : **0 397 675 B1**

(12) # EUROPÄISCHE PATENTSCHRIFT

(45) Veröffentlichungstag der Patentschrift :
**13.11.91 Patentblatt 91/46**

(51) Int. Cl.$^5$ : **B60K 28/16, G05D 17/00**

(21) Anmeldenummer : **89900230.7**

(22) Anmeldetag : **08.12.88**

(86) Internationale Anmeldenummer :
**PCT/EP88/01122**

(87) Internationale Veröffentlichungsnummer :
**WO 89/06610 27.07.89 Gazette 89/16**

(54) **ANTRIEBSSCHLUPFREGELSYSTEM.**

(30) Priorität : **19.01.88 DE 3801323**

(43) Veröffentlichungstag der Anmeldung :
**22.11.90 Patentblatt 90/47**

(45) Bekanntmachung des Hinweises auf die
Patenterteilung :
**13.11.91 Patentblatt 91/46**

(84) Benannte Vertragsstaaten :
**DE FR GB IT SE**

(56) Entgegenhaltungen :
**EP-A- 0 163 940**
**DE-A- 2 832 739**
**DE-A- 3 205 627**

(56) Entgegenhaltungen :
**DE-A- 3 545 012**
**DE-A- 3 603 765**
**DE-C- 3 545 717**
**US-A- 4 625 824**
**US-A- 4 703 823**

(73) Patentinhaber : **ROBERT BOSCH GmbH**
**Postfach 10 60 50**
**W-7000 Stuttgart 10 (DE)**

(72) Erfinder : **SIGL, Alfred**
**Waldeck 8**
**W-7126 Sersheim (DE)**

(74) Vertreter : **Kammer, Arno, Dipl.-Ing.**
**ROBERT BOSCH GmbH Zentralabteilung**
**Patente Postfach 50**
**W-7000 Stuttgart 1 (DE)**

## Beschreibung

Die Erfindung betrifft ein Antriebsschlupfregelsystem mit den Merkmalen des Oberbegriffs des Anspruchs 1.

## Stand der Technik

Es sind verschiedenartige Antriebsschlupfregelsysteme mit Regelung des Motormoments bekannt. So kann man z.B. die Regelung auslösen, schon wenn ein angetriebenes Rad einen vorgegebenen Schlupfwert überschreitet oder erst wenn beide angetriebenen Räder dies tun. Auch kann man die Radbeschleunigung der Räder feststellen und eine Durchdrehneigung unterstellen und die Regelung auslösen, wenn eines oder beide Räder eine bestimmte Beschleunigung überschreiten. Auch bei Kombinationen von Schlupf und Beschleunigung kann die Regelungsauslösung erfolgen. Es ist auch schon bekannt, die Motormomentenregelung bei geringer Drehzahl (US-A-4625824 und DE-A-3205627) oder geringer Fahrgeschwindigkeit (DE-C-3545717) zu unterdrücken.

## Vorteile der Erfindung

Durch die erfindungsgemäße Ausbildung des Antriebsschlupfregelsystems soll verhindert-werden, daß durch eine Störung, z.B. durch eine durch eine Fahrbahnunebenheit vorgetäuschte große Radbeschleunigung, fälschlicherweise und damit unnötig und störend eine Auslösung der Motormomentenregelung zustande kommt.

## Figurenbeschreibung

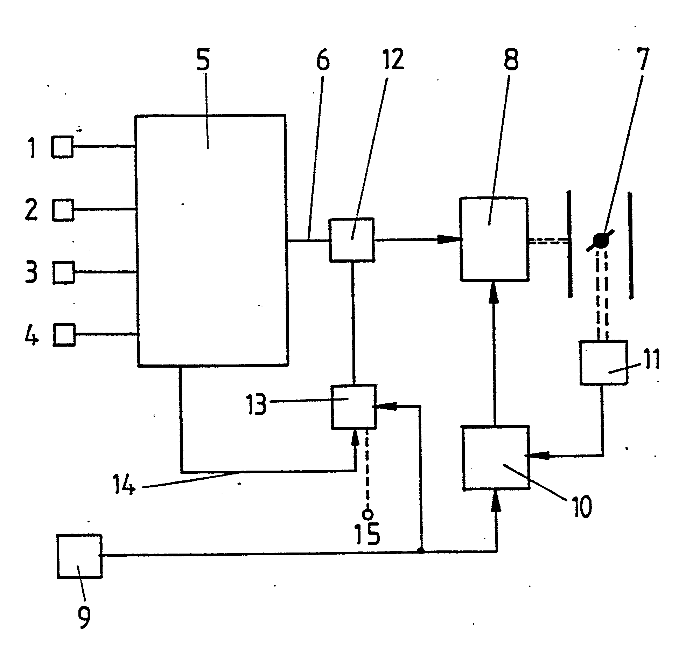

Anhand der Zeichnung wird ein Ausführungsbeispiel der Erfindung erläutert Dort sind mit 1 und 2 den angetriebenen Rädern und mit 3 und 4 den nicht angetriebenen Rädern zugeordnete Radgeschwindigkeitssensoren bezeichnet. Deren Signale werden einer Elektronikeinheit 5 zugeführt, die nach einem der bekannten Prinzipien (z.B. entsprechend dem aus der DE-A-3205627 bekannten Prinzip) bei Durchdrehneigung an beiden Rädern ein Regelsignal auf einer Leitung 6 erzeugt, das zur Verstellung eines mit einer Drosselklappe 7 verbundenen Antriebs 8 geeignet ist. Der Antrieb kann z.B. ein Elektromotor sein; gegebenenfalls können für dessen gegensinnigen Antrieb auch zwei Leitungen 6 vorgesehen sein, was hier der Einfachheit der Darstellung halber nicht gezeigt ist.

Mit 9 ist ein vom Fahrpedal verstellbarer Signalgeber bezeichnet, dessen Ausgangssignal dem Fahrerwunsch entspricht. Dieses Signal wird einem Vergleicher 10 zugeführt, dem außerdem noch das Signal eines mit der Drosselklappe 7 verbundenen Stellungsgebers 11 zugeführt wird. Das Ausgangssignal des Vergleichers 10 wird ebenfalls dem Antrieb 8 zugeführt, der normalerweise die Drosselklappe durch das Ausgangssignal des Vergleichers 10 in die vom Fahrer gewünschte Stellung bringt. Die Verschaltung im Antrieb ist so, daß im Falle der Regelung durch die Elektronikeinheit 5 die Regelung Vorrang hat, der Fahrerwunsch also ignoriet wird, bis er gegenüber dem Regler den kleineren Drosselklappenstellwert fordert (Minimalwertbildung zwischen Reglerforderung und Fahrerwunsch).

Um eine Auslösung der Drosselklappenreduzierung durch eine Störung zu verhindern, ist in die Leitung 6 ein Tor 12 eingeschaltet, das ohne Ansteuerung die Leitung 6 sperrt. Diese Sperrung ist wirksam, solange die Verstellung der Drosselklappe nicht einen vorgegebenen Wert übersteigt. Hierzu ist ein weiterer Vergleicher 13 mit einer vorgegebenen Schwelle vorgesehen, dem das Signal des Fahrpedalstellungsgebers 9 zugeführt wird und der ein Ausgangssignal erzeugt und damit die Regelungsauslösung ermöglicht, wenn das Signal des Stellungsgebers die Schwelle übersteigt. Die Schwelle kann von der Fahrzeuggeschwindigkeit $V_F$ abhängig sein, wozu dem Vergleicher 13 zur Schwellenverschiebung über eine Leitung 14 z.B. die in der Elektronikeinheit 5 gemittelte Radgeschwindigkeit der nicht angetriebenen Räder zugeführt wird. Die Schwelle S kann z.B. wie folgt definiert sein:

$$S = a + b \cdot V_F$$

wobei a bei 3° liegen kann und b etwa 0,1° pro km/h ist. Alternativ kann dem Vergleicher 13 über eine Klemme auch ein der Motordrehzahl n entsprechendes Signal zugeführt werden, wobei dann die Schwelle S durch

$$S = a + C \cdot n$$

definiert sein kann, wobei c in der Größenordnung von 0,003° pro U/min liegen kann.

Anstelle der Einwirkung auf die Drosselklappe 7 durch die Regelung konnte das Organ 8 z. B. auch eine Zündzeitpunktverstellung oder eine Zünd-/Einspritzunterdrückung bewirken.

## Patentansprüche

1. Antriebsschlupfregelsystem, bei dem das Motormoment bei Durchdrehen wenigstens eines rades geregelt wird derart, daß das Motormoment gegenüber dem vom Fahrer geforderten Motormoment verkleinert wird wobei die Motormomentregelung nur unter vorgegebenen Bedingungen zugelassen wird, dadurch gekennzeichnet, daß das Auslösen der Regelung nur zugelassen wird, wenn die Stellung der Drosselklappe einen vorgegebenen relativ kleinen Wert von ca. 3° gegenüber der Leerlaufstellung, welcher Wert sich mit der Motordrehzahl und/oder der Fahrzeuggeschwindigkeit erhöht, überschreitet.

2. Antriebsschlupfregelsystem nach Anspruch 1, dadurch gekennzeichnet, daß der Wert mittels in der Elektronik abgespeicherten Motor- und Fahrzeugkenndaten entsprechend einer Bedingung für beschleunigungsfreies Fahrer berechnet wird.

## Claims

1. Drive slip control system in which the engine torque of at least one wheel is controlled in the case of spin in such a way that the engine torque is reduced relative to the engine torque demanded by the driver, the engine torque control only being permitted under specified conditions, characterised in that initiation of the control is only permitted when the position of the throttle butterfly exceeds a specified relatively small value of approximately 3° relative to the idling position, which value is increased with the engine rotational speed and/or the vehicle speed.

2. Drive slip control system according to Claim 1, characterised in that the value is calculated by means of engine and vehicle characteristic data stored in the electronics and corresponding to a condition for acceleration-free driver (sic).

## Revendications

1. Système de régulation du glissement à l'entraînement, dans lequel le couple moteur est réglé lors du patinage d'au moins une roue de telle façon que le couple moteur soit réduit par rapport au couple moteur demandé par le conducteur, dans lequel la régulation du couple moteur n'est autorisée que sous des conditions prédéterminées, système de régulation caractérisé en ce que le déclenchement de la régulation ne s'opère que si la position du clapet d'étranglement dépasse une valeur prédéterminée relativement petite d'environ 3° par rapport à la position de marche au ralenti, cette valeur augmentant avec la vitesse de rotation du moteur et/ou la vitesse du véhicule.

2. Système de régulation du glissement à l'entraînement selon la revendication 1, caractérisé en ce que la valeur est calculée au moyen des données du moteur et du véhicule mise en mémoire dans l'unité électronique selon une condition pour une conduite sans accélération.